# EUROPÄISCHE PATENTSCHRIFT

(11) **EP 1 808 878 B1**
(45) Veröffentlichungstag und Bekanntmachung des Hinweises auf die Patenterteilung: **20.08.2008**
(21) Anmeldenummer: 06000536.0
(22) Anmeldetag: 11.01.2006
(51) Int. Cl.: H01H 9/04, H02B 1/28

(54) **Elektrische Einrichtung mit Ausschaltung des Laststromkreises in explosionsgefährdeter Umgebung**
Electrical device with load circuit switching in an explosive environment
Dispositif électrique avec commutation du circuit de puissance dans un milieu explosible

(43) Veröffentlichungstag der Anmeldung: 18.07.2007
(73) Patentinhaber: SIEMENS AKTIENGESELLSCHAFT, 80333 München (DE)
(72) Erfinder: Bräunlich, Michael, 09117 Chemnitz (DE); Lohse, Ralf, 09387 Jahnsdorf (DE)

(56) Entgegenhaltungen:
- EP-A- 1 156 272
- DE-A1- 10 058 107
- GB-A- 1 501 818
- US-A- 4 214 291
- US-A- 4 737 603

## Beschreibung

Die Erfindung bezieht sich auf eine elektrische Einrichtung mit einem Gerät, das einen Laststromkreis und Anschlussklemmen zum Anschluss an den Laststromkreis aufweist.

Derartige elektrische Einrichtungen sind vielfach bekannt. Eine solche elektrische Einrichtung kann z.B. ein modular aufgebautes Steuerungssystem mit mehreren Baugruppen als Geräte sein, die nach Möglichkeit während des Betriebes austauschbar sein sollen. Für Baugruppen, die nicht in einer Umgebung installiert sind, in der Explosivgas- oder Staub-LuftGemische vorkommen, ist dies in der Regel nur mit verhältnismäßig leicht realisierbaren Forderungen an die Aufbautechnik und an das logische Bussystem verbunden. Problematisch wird es allerdings, wenn das Steuerungssystem sich in einer Ex-Umgebung befindet. Hier ist das Trennen der Baugruppe bzw. des Geräts vom System nur zulässig, wenn beispielsweise über die den zu trennenden Steckverbinder nur eigensichere Stromkreise geschaltet sind. Dies ist bei einer Relaisbaugruppe nur für den logischen Teil, also die Busanschaltung und die Ansteuerung der Relais möglich.

Für den Laststromkreis sind in der Regel Spannungen von 60 V bis 250 V und Ströme von mehreren Ampere zulässig. Wird solch ein Laststromkreis im Betrieb am Steckverbinder getrennt, kann der hierbei entstehende Funken zu einer Zündung des umgebenden explosiven Gemisches führen.

Auch mit einer sicheren Abschaltung des Stromkreises kann nicht davon ausgegangen werden, dass die Relaiskontakte wirklich geöffnet sind. Klebende Relaiskontakte könnten zwar über ein Sicherheitsrelais ausgewertet werden, im Falle eines klebenden Kontaktpaares darf aber die Relaisbaugruppe trotzdem nicht unter Last gewechselt werden. Hier müsste vorher über einen in derselben Zone installierten ex-zugelassenen Trennschalter bzw. eines in sicherer Umgebung installierten normalen Schalters die Lastspannung abgeschaltet werden.

Es wäre demnach in jedem Fall ein zusätzlicher Aufwand erforderlich, der teilweise an Personen mit besonderen Berechtigungen geknüpft ist.

Dokument US-A-4737603 offenbart eine elektrische Einrichtung gemäß dem Oberbegriff des Anspruchs 1.

Daher liegt der Erfindung die Aufgabe zugrunde, eine elektrische Einrichtung der oben beschriebenen Art dahingehend zu verbessern, dass ein Trennen des Geräts im Betrieb vom Laststromkreis in Ex-Umgebung möglich ist.

Die Aufgabe wird dadurch gelöst, dass in der Zuleitung zu den Anschlussklemmen Trennkontakte zur Trennung des Laststromkreises im Betrieb des Gerätes vorhanden sind, wobei in Verbindung mit den Trennkontakten zum Explosionsschutz dienende Mittel vorgesehen sind.

Vorteilhafte Weiterbildungen der Erfindung sind den Unteransprüchen zu entnehmen.

Die Erfindung wird im Folgenden anhand eines Ausführungsbeispiels näher erläutert.

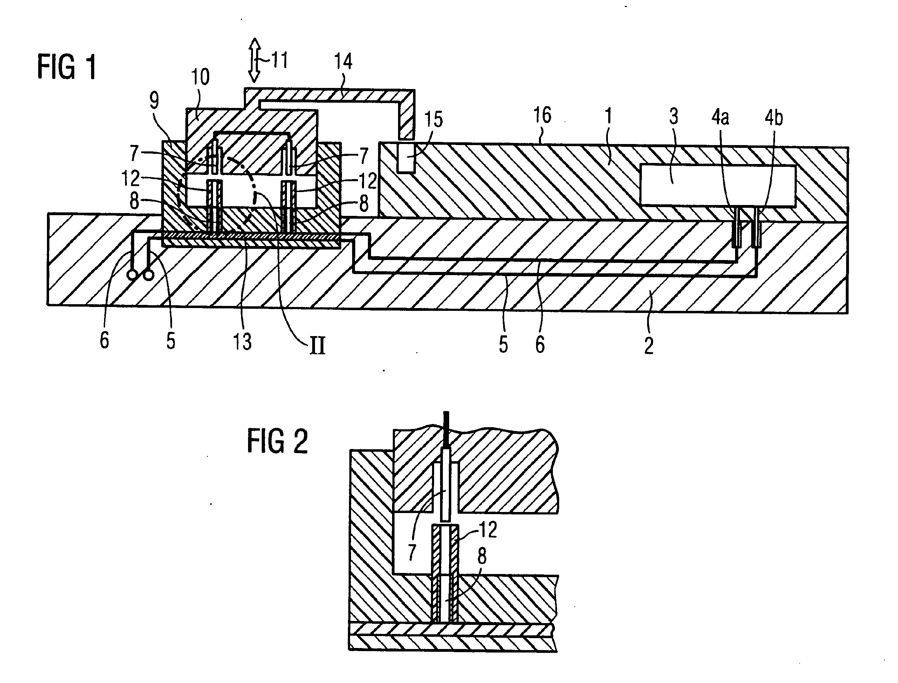

Anhand der einzigen Figur wird die Erfindung vereinfachend dargestellt.

Die Figur zeigt ein elektrisches Gerät, hier eine Relaisbaugruppe 1, die auf einem Terminalmodul 2 mechanisch und elektrisch adaptiert ist. Es handelt sich hier speziell um einen Bestandteil eines modular aufgebauten Steuerungssystems, das üblicherweise Baugruppen verschiedener Art aufweist, z.B. zur Stromversorgung, Logikbaugruppen usw. Die vorliegende Erfindung kann aber auch nicht nur in diesem Bereich, sondern auch in anderen Fällen angewandt werden. Die Relaisbaugruppe 1 gemäß der Figur weist ein Relais 3 auf, wodurch ein Laststromkreis mit den an der Relaisbaugruppe 1 von außen zugänglichen Anschlussklemmen 4a, 4b gebildet ist. Mit Hilfe von hier nicht näher dargestellten Steckkontakten erfolgt über zwei Leitungen 5, 6 im Terminalmodul 2 eine Zuleitung zu den Anschlussklemmen 4a, 4b und damit zum Laststromkreis. Im Terminalmodul 2 ist ein Kontaktbaustein mit Trennkontakten 7, 8 zur Trennung des Laststromkreises integriert, in dem die Leitungen 5, 6 aufgetrennt werden können. Der Kontaktbaustein ist aus einem Buchsenteil 9 und einem zumindest teilweise abziehbaren Stiftteil 10 zusammengesetzt und erfüllt die an eine Ex-Umgebung gestellten Bedingungen gemäß den Vorschriften der DIN EN 50014 im Allgemeinen und der DIN EN 50018 im Besonderen.

Der Stiftteil 10 weist zumindest vier Kontaktstifte 7 auf, von denen jeweils zwei elektrisch gebrückt sind. Dazu passende Buchsenkontakte 8 befinden sich gegenüberliegend im Buchsenteil 9. Die Figur zeigt den Zustand, in dem der Laststromkreis getrennt ist, d.h. der Stiftteil 10 ist teilweise abgezogen, so dass die Kontaktstifte 7 aus den Buchsenkontakten 8 ebenfalls herausgezogen sind. Der Doppelpfeil 11 zeigt die Bewegungsrichtung des abziehbaren Stiftteils 10 an. Allerdings ist die Erfindung nicht hierauf beschränkt, da stattdessen das Buchsenteil 9 abziehbar ausgeführt werden könnte. Im vorliegenden Ausführungsbeispiel stecken die Buchsenkontakte 8 in einem definierten Spalt zur Erfüllung des Explosionsschutzes, umgeben von jeweils einem Kunststoffröhrchen 12. Hierbei werden die Bedingungen eines Ex-d-Spaltes gemäß den Vorschriften DIN EN 50018 eingehalten.

Endseitig sind die Buchsenkontakte 8 auf einer Leiterplatte 13 verlötet und mit den Leitungen 5 bzw. 6 elektrisch verbunden. In der Figur sind vereinfachend lediglich zwei Kontaktstifte 7 und die zugehörigen Buchsenkontakte 8 zur Trennung einer der beiden Leitungen 5, 6 dargestellt.

Der Kontaktbaustein ist mechanisch so gestaltet, dass er zwei weitere mechanische Aufgaben erfüllt:
1. Im gesteckten Zustand ist der Zugriff auf die Verriegelung der Relaisbaugruppe verhindert, so dass diese nicht gelöst werden kann. Erst im gelösten Zustand, wenn die Laststromkreise des Relais sicher stromfrei sind, kann die Relaisbaugruppe entfernt und gewechselt werden.
2. Das Lösen des Bausteins und damit die Trennung der nicht eigensicheren Laststromkreise ist nicht ruckartig möglich, sondern zweistufig ausgebildet. Alternativ ist auch eine Methode vorstellbar, die ein langsames, stetiges Lösen der Kontakte garantiert. Dies ließe sich z.B. mit Hilfe einer Schraube und entsprechender Gewindesteigung realisieren.

Der Stiftteil 10 ist z.B. mit einem Arm 14 versehen, dessen abgewinkeltes Ende im geschlossenen Zustand der Trennkontakte 7, 8 in eine Ausnehmung 15 des Gerätegehäuses 16 eingreift und somit das Lösen der Relaisbaugruppe 1 verhindert.

## Patentansprüche

1. Elektrische Einrichtung mit einem Gerät (1), das einen Laststromkreis und Anschlussklemmen (4a, 4b) zum Anschluss des Laststromkreises aufweist,
wobei in der Zuleitung zu den Anschlussklemmen (4a, 4b) Trennkontakte (7, 8) zur Trennung des Laststromkreises im Betrieb des Gerätes (1) vorhanden sind, wobei in Verbindung mit den Trennkontakten (7, 8) zum Explosionsschutz dienende Mittel (12) vorgesehen sind,
**dadurch gekennzeichnet, dass** das Gerät als Baugruppe (1) eines modular aufgebauten Steuerungssystems ausgeführt ist, das ein Terminalmodul (2) aufweist, auf dem die Baugruppe (1) mechanisch und elektrisch adaptiert ist, und
dass eine Verriegelung der Baugruppe (1) vorgesehen ist, die das Lösen der Baugruppe (1) vom Terminalmodul (2) im geschlossenen Zustand der Trennkontakte (7, 8) verhindert.

2. Elektrische Einrichtung nach Anspruch 1, **dadurch gekennzeichnet, dass** die Trennkontakte als Buchsenkontakte (8) und daran angepasste Stiftkontakte (7) ausgeführt sind.

3. Elektrische Einrichtung nach Anspruch 2, **dadurch gekennzeichnet, dass** die Buchsenkontakte (8) Bestandteil eines Buchsenteils (9) und die Stiftkontakte (7) Bestandteil eines Stiftteils (10) sind, wobei Buchsenteil (9) und Stiftteil (10) einen vom Gerät (1) separaten Kontaktbaustein bilden und das Stiftteil (10) oder das Buchsenteil (9) zur Trennung der Trennkontakte (7, 8) zumindest teilweise abziehbar ist.

4. Elektrische Einrichtung nach einem der vorangehenden Ansprüche, **dadurch gekennzeichnet, dass** als Mittel Kunststoffröhren (12) vorgesehen sind, in denen die Buchsenkontakte (8) stecken.

5. Elektrische Einrichtung nach Anspruch 4, **dadurch gekennzeichnet, dass** die Buchsenkontakte (8) mit den Kunststoffröhrchen (12) in jeweils definierten Spalten zur Erfüllung des Explosionsschutzes stecken.

6. Elektrische Einrichtung nach einem der vorangehenden Ansprüche, **dadurch gekennzeichnet, dass** die Baugruppe als Relaisbaugruppe (1) mit mindestens einem Relais (3) ausgeführt ist.

## Claims

1. Electrical entity including a device (1) which features a load current circuit and connection terminals (4a, 4b) for connection of the load current circuit,
with separation contacts (7, 8) for separating the load current circuit during operation of the device (1) being present in the supply line to the connection terminals (4a, 4b), with means (12) for explosion protection being provided in connection with the separation contacts (7, 8)
**characterised in that**
the device is designed as an assembly (1) of a modular control system that includes a terminal module (2) to which the assembly (1) is mechanically and electrically adapted and provision is made for a lock of the assembly (1), which lock prevents the release of the assembly (1) from the terminal module (2) in the closed state of the separation contacts (7, 8).

2. Electrical entity according to claim 1, **characterised in that** the separation contacts are designed as socket contacts (8) and matching pin contacts (7).

3. Electrical entity according to claim 2, **characterised in that** the socket contacts (8) are included in a socket part (9) and the pin contacts (7) are included in a pin part (10), wherein socket part (9) and pin part (10) form a contact assembly which is separate from the device (1), and the pin part (10) or the socket part (9) is at least partly retractable in order to separate the separation contacts (7, 8).

4. Electrical entity according to one of the preceding claims, **characterised in that** plastic tubes (12) in which the socket contacts (8) are seated are provided as means.

5. Electrical entity according to claim 4, **characterised in that** the socket contacts (8) and the plastic tubes (12) are in each case seated in defined slots in order to ensure the explosion protection.

6. Electrical entity according to one of the preceding claims, **characterised in that** the assembly is designed as a relay assembly (1) comprising at least one relay (3).

## Revendications

1. Dispositif électrique comprenant un appareil ( 1 ) ayant un circuit de charge et des bornes de connexion ( 4a, 4b ) pour la connexion du circuit de charge,
dans lequel des contacts de rupture ( 7, 8 ) sont prévus dans l'alimentation des bornes de connexion ( 4a, 4b ) pour la déconnexion du circuit de charge lorsque l'appareil ( 1 ) est en service, des moyens ( 12 ) servant à la protection contre les explosions étant prévus conjointement avec les contacts de rupture ( 7, 8 ),
**caractérisé en ce que** l'appareil est réalisé en tant qu'unité ( 1 ) d'un système de commande modulaire, lequel a un module terminal ( 2 ) sur lequel l'unité ( 1 ) est adaptée mécaniquement et électriquement, et
**en ce qu'**il est prévu un verrouillage de l'unité ( 1 ) pour empêcher la désolidarisation de l'unité ( 1 ) par rapport au module terminal ( 2 ) lorsque les contacts de rupture ( 7, 8 ) sont fermés.

2. Dispositif électrique selon la revendication 1,
**caractérisé en ce que** les contacts de rupture sont réalisés en tant que contacts de douille ( 8 ) et contacts de broche ( 7 ) adaptés aux contacts de douille.

3. Dispositif électrique selon la revendication 2,
**caractérisé en ce que** les contacts de douille ( 8 ) font partie d'une partie femelle ( 9 ) et les contacts de broche ( 7 ) font partie d'une partie mâle ( 10 ), la partie femelle ( 9 ) et la partie mâle ( 10 ) formant un module de contact séparé de l'appareil ( 1 ) et la partie mâle ( 10 ) ou la partie femelle ( 9 ) étant au moins partiellement extractible en vue de la déconnexion des contacts de rupture ( 7, 8 ).

4. Dispositif électrique selon l'une des revendications précédentes, **caractérisé en ce qu'**il est prévu comme moyens des tubes ( 12 ) en matière plastique, dans lesquels sont enfichés les contacts de douille ( 8 ).

5. Dispositif électrique selon la revendication 4,
**caractérisé en ce que** les contacts de douille ( 8 ) munis des tubes ( 12 ) en matière plastique sont enfichés respectivement dans des fentes définies pour réaliser la protection contre les explosions.

6. Dispositif électrique selon l'une des revendications précédentes, **caractérisé en ce que** l'unité est réalisée en tant qu'unité de relais comprenant au moins un relais ( 3 ).
